# EUROPÄISCHE PATENTSCHRIFT

(11) **EP 1 285 549 B1**
(45) Veröffentlichungstag und Bekanntmachung des Hinweises auf die Patenterteilung: **17.08.2016**
(21) Anmeldenummer: 01935951.2
(22) Anmeldetag: 03.04.2001
(51) Int. Cl.: H04W 12/02, H04W 12/06, H04W 88/02

(54) **VERFAHREN ZUM AUFBAU EINER VERBINDUNG ZWISCHEN EINEM ENDGERÄT UND EINEM BEDIENENDEN MOBILFUNKNETZ, MOBILFUNKNETZ UND ENDGERÄT DAFÜR**
METHOD FOR ESTABLISHING A CONNECTION BETWEEN A TERMINAL AND AN OPERATING MOBILE RADIO NETWORK, MOBILE RADIO NETWORK AND TERMINAL USED IN SUCH A METHOD
PROCÉDÉ POUR ÉTABLIR UNE LIAISON ENTRE UN TERMINAL ET UN RÉSEAU TÉLÉPHONIQUE MOBILE DE DESSERTE, ET RÉSEAU TÉLÉPHONIQUE MOBILE ET TERMINAL POUR LA MISE EN OEUVRE DE CE PROCÉDÉ

(30) Priorität: 22.05.2000 DE 10025271
(43) Veröffentlichungstag der Anmeldung: 26.02.2003
(73) Patentinhaber: Siemens Aktiengesellschaft, 80333 München (DE)
(72) Erfinder: VINCK, Bart, 2050 Antwerpen (BE)
(86) Internationale Anmeldenummer: PCT/DE2001/001298
(87) Internationale Veröffentlichungsnummer: WO 2001/091494

(56) Entgegenhaltungen:
- DE-A- 19 812 215
- US-A- 5 371 794
- "Universal Mobile Telecommunications System (UMTS); 3G Security; Security Architecture (3g TS 33.102 version 3.3.1 Release 1999)" ETSI TECHNICAL SPECIFICATION, 1. Januar 2000 (2000-01-01), Seiten 1-60, XP002175203 Sophia Antipolis, France

## Beschreibung

Die Erfindung betrifft ein Verfahren zum Aufbau einer Verbindung zwischen einem Endgerät und einem bedienenden Mobilfunknetz, insbesondere einem Paket-Mobilfunknetz wie etwa einem GPRS- oder UMTS-PO Netz, sowie ein Mobilfunknetz und ein Endgerät, die insbesondere zum Einsatz bei einem solchen Verfahren geeignet sind.

Die DE 198 12 215 A1 offenbart ein Verfahren zum Verhindern von Abhören auf der Funkschnittstelle eines Mobilfunknetzes, wobei eine Mobilstation einen vom Teilnehmer einschaltbaren Betriebsmodus aufweist, in welchem eine Verbindung abgebrochen wird, wenn die empfangene Kennung die Verbindungen mit unverschlüsselten Informationen zuläßt.

Bei unverschlüsselten Verbindungen auf Mobilfunksystemen und insbesondere auf Paket-Mobilfunksystemen wie etwa GPRS oder UMTS-PO besteht die Möglichkeit von sogenannten "Hijacking"-Angriffen, bei denen ein Eindringling eigene Datei oder Datenpakete in eine fremde Verbindung einschleust und so Funkressourcen parasitiert, die von regulären Benutzern bezahlt werden. Möglichkeiten zu solchen Angriffen bestehen zum Beispiel, wenn ein regulärer Benutzer auf Datendienste wie etwa die eines Internet-Providers oder auf Ansagedienste, die häufig hohe Zeitgebühren berechnen, zugreift. Ein Angreifer, dem es gelingt, sich in eine solche Verbindung einzuschleusen, kann mit auf diese Dienste zugreifen und den Zugriff womöglich sogar fortsetzen, während der reguläre Benutzer die Verbindung bereits beendet glaubt, wobei dafür anfallende Gebühren dem regulären Benutzer berechnet werden. Falls Benutzungsgebühren nicht anhand der Dauer einer Verbindung sondern anhand der Zahl übertragener Dateien berechnet werden, kann der Angreifer seine Datei mit einer Datei des Benutzers mischen. Äußerst gefährlich für einen Benutzer ist die Möglichkeit von Angriffen beispielsweise auf Online-Zahlungsverkehr. Hier könnte es einem Angreifer gelingen, von einem Benutzer unbemerkt Zahlungsvorgänge zu dessen Nachteil auszulösen. Eine wirksame Gegenmaßnahme gegen solchen Mißbrauch ist die Verwendung von Verschlüsselungstechniken.

Zum Schutz bietet das bekannte GSM-Netz dem Endgerät und dem Netzwerk die Möglichkeit, eine verschlüsselte Verbindung aufzubauen, und beim Verbindungsaufbau eine vom beiden Seiten unterstützte Verschlüsselungstechnik auszuwählen.

Bei dem bekannten GSM-Netz wird zur Vorbereitung einer verschlüsselten Verbindung in einer frühen Phase des Verbindungsaufbaus, noch vor der Authentisierung (authentication and key agreement zwischen Endgerät und Basisstation) vom Endgerät an die Basisstation gemeldet, welche Verschlüsselungstechniken das Endgerät unterstützt, und die Basisstation wählt unter diesen Verschlüsselungstechniken eine aus, die sie selbst auch unterstützt. Die Bezeichnung dieser Verschlüsselungstechnik wird an das Endgerät zurückübertragen, und die Übertragung unter Verwendung des so festgelegten Verschlüsselungsmechanismus beginnt.

Diese Verhandlung über eine Verschlüsselungstechnik ist aber nicht sicher, wenn man aktive Angriffe auf der Schnittstelle berücksichtigt; das Netzwerk kann nicht überprüfen, ob die Informationen über die vom Endgerät unterstützten Verschlüsselungstechniken, die es empfangt tatsächlich durch das Endgerät gesendet worden sind, und ebenfalls ist das Endgerät nicht sicher, daß das Netzwerk die richtige Informationen bekommen hat.

Dieser beim GSM-Netz gebräuchliche Ansatz wird auch auf das UMTS-System übertragen. Bei diesem System werden zusätzlich Techniken zur Integritätssicherung eingesetzt, die es einem Empfänger ermöglichen, zu erkennen, ob von ihm empfangene Daten tatsächlich von einem vermuteten Sender stammen, oder ob sie von einem Dritten verfälscht worden sind.

Beim Verbindungsaufbau im UMTS-System sind sowohl die Verschlüsselungs- als auch die Integritätsschutztechniken, die das Endgerät unterstützt, in ihm statisch gespeichert und werden in einer frühen Phase des Verbindungsaufbaus an das bedienende Mobilfunknetz übermittelt. Das bedienende Mobilfunknetz wählt eine Verschlüsselungs- und eine Integritätsschutztechnik aus, die es selbst auch unterstützt, startet den Integritätsschutz und sendet Bezeichnungen der ausgewählten Techniken an das Endgerät. Zusammen mit der ausgewählten Verschlüsselungs- und Integritätsschutztechnik meldet das Netz an das Endgerät die von ihm empfangenen Techniken zurück. Bei Empfang dieser Information überprüft das Endgerät die Vollständigkeit der empfangenen Meldung und vergleicht die an das Netz übermittelten Verschlüsselungs- und Integritätsschutztechniken mit den von dort zurückgemeldeten, um so ggf. eine Verfälschung der ausgetauschten Meldungen zu erkennen. Wenn das Endgerät den Empfang bestätigt hat, kann die Verschlüsselung beginnen. Wenn das Netz keine Verschlüsselungstechnik, sondern die Betriebsart "unverschlusselt" auswählt, so kann das Endgerät die Verbindung abweisen.

Eine solche Vorgehensweise ist unproblematisch, solange sich das Endgerät im Bereich seines Heimnetzes befindet, denn hier läßt sich sicherstellen, daß das Endgerät und das Netz über wenigstens einen gemeinsamen Verschlüsselungsmodus verfügen, und Fälle, wo eine vom Benutzer des Geräts gewollte Verbindung nicht verschlüsselt werden kann, kommen nicht vor. Es liegt deshalb nahe und ist auch bereits als Standard vorgeschlagen worden, Endgeräte zu verwenden, die unverschlüsselte Verbindungen kurzerhand zurückweisen. Wenn alle Benutzer mit solchen Endgeräten ausgerüstet sind, ist es für einen Eindringling kaum mehr möglich, sich einer existierenden Verbindung zu bemächtigen und eigene Daten darauf so einzuschleusen, daß sie beabsichtigte Reaktionen auf seiten des Netzes auslösen können.

Ein empfindlicher Nachteil dieses Ansatzes ist jedoch, daß er Probleme bei der Anwendung aufwirft, wenn das bedienende Mobilfunknetz nicht auch das Heimnetz des Endgeräts ist. Der Gebrauch von Verschlüsselungstechniken im Mobilfunk ist nämlich nicht in allen Ländern zulässig, außerdem fallen diese Techniken zum Teil unter Exportrestriktionen, so daß sie in manchen Ländern, wo sie nach nationaler Gesetzgebung möglicherweise zulässig wären, nicht angewendet werden können, weil der Export dorthin Sanktionen unterliegt.

Endgeräte, die nur verschlüsselte Verbindungen zulassen, wären also in einer Vielzahl von Ländern nicht zu gebrauchen und dadurch für die Benutzer unattraktiv.

Es wäre zwar denkbar, daß ein Endgerät beim Verbindungsaufbau dem bedienenden Netz nicht nur die unterstützten Verschlüsselungstechniken zur Auswahl anbietet, sondern auch die Option, eine Verbindung unverschlüsselt zu betreiben. Dies würde zwar möglicherweise den geographischen Einsatzbereich der Geräte erweitern, ginge jedoch auf Kosten der Sicherheit. In diesem Fall wäre nämlich der gewünschte Schutz nicht mehr wirksam, da ein Angreifer die Möglichkeit hätte, sich dem Endgerät gegenüber als Basisstation des bedienenden Netzwerks auszugeben und dem Endgerät vorzuschreiben, daß die Verbindung unverschlüsselt bleiben soll.

Die Aufgabe der Erfindung besteht darin, ein Verfahren zum Aufbauen von Verbindungen und ein dafür geeignetes Endgeräte und Mobilfunknetz anzugeben, die einerseits ein hohes Maß an Sicherheit gegen "Hijacking"-Angriffe bieten, andererseits aber auch in Ländern anwendbar sind, in denen Verschlüsselung nicht eingesetzt werden kann, und die gleichzeitig für die Anwender unkompliziert zu nutzen sind.

Diese Aufgabe wird durch das Verfahren mit den Merkmalen des Patentanspruchs 1 bzw. das Endgerät mit den Merkmalen des Patentanspruchs 9 bzw. das Mobilfunksystem mit den Merkmalen des Patentanspruchs 10 gelöst.

Vorteilhafte Ausgestaltungen sind Gegenstand von abhängigen Ansprüchen.

Indem gemäß der Erfindung die Zuständigkeit für die Auswahl des für eine Verbindung zu benutzenden Verschlüsselungsverfahrens auf das Endgerät verlagert wird, kann ein Angreifer auf diese Auswahl keinen Einfluß mehr nehmen, insbesondere kann er keine unverschlüsselte Verbindung herbeiführen, wenn dies nicht ausdrücklich genehmigt ist. Die Genehmigung kann vom Benutzer des Endgeräts erteilt werden, zum Beispiel vorab durch Betreiben des Endgeräts in einen Betriebszustand, in dem es auch unverschlüsselte Verbindungen entgegennimmt, oder im Einzelfall, durch Betreiben des Endgeräts in einen Betriebszustand, in dem das Endgerät jedesmal, wenn eine aufzubauende Verbindung nicht verschlüsselt werden kann, die Genehmigung zum Aufbau dieser Verbindung vom Benutzer anfordert. Die Genehmigung kann auch vom Heimnetz des Endgeräts erteilt werden, wie später noch genauer erläutert wird.

Wenn das bedienende Mobilfunknetz einen Integritätsschutz zur Verfügung stellt, etwa im Falle eines UMTS-Netzes, ist es zum Schutz vor Angriffen wünschenswert, daß der Integritätsschutz aktiviert wird, bevor die Nachricht über die von dem bedienenden Mobilfunknetz unterstützten Verschlüsselungstechniken an das Endgerät übertragen wird. So kann das Endgerät erkennen, ob die Nachricht verfälscht worden ist oder von einer unbefugten Quelle stammt und sie gegebenenfalls ignorieren.

Um einen Integritätsschutz einrichten zu können, ist es wünschenswert, daß das Endgerät von ihm unterstützte Integritätsschutztechniken an das bedienende Mobilfunknetz meldet und das bedienende Mobilfunknetz unter den von ihm selbst und dem Endgerät unterstützten Integritätsschutztechniken eine auswählt und eine Mitteilung über die ausgewählte Integritätsschutztechnik an das Endgerät übermittelt. Diese Mitteilung kann zweckmäßigerweise Teil der Nachricht an das Endgerät sein, die die von dem bedienenden Mobilfunknetz unterstützten Verschlüsselungstechniken enthält.

Bei einer bevorzugten Ausgestaltung des Verfahrens wird zum Aufbau einer Verbindung eine Verschlüsselungsverwaltungsinformation von dem Heimnetz an das Endgerät übermittelt, die dem Endgerät angibt, ob unverschlüsselte Verbindungen mit dem bedienenden Mobilfunknetz vom Heimnetz genehmigt sind. Diese Genehmigung kann , wie oben dargelegt, z. B. aufgrund der nationalen Gesetzeslage am Ort des bedienenden Mobilfunknetzes oder von Exportbeschränkungen notwendig sein.

Wenn das bedienende Mobilfunknetz eine verschlüsselte Verbindung zuläßt, sollte Verschlüsselung benutzt werden; es ist jedoch nicht grundsätzlich ausgeschlossen, daß in Ausnahmefällen aus Gründen, die nicht im Rahmen der vorliegenden Erfindung liegen und in der nachfolgenden Beschreibung nicht genannt sind, eine Verbindung unverschlüsselt hergestellt werden muß, auch wenn das bedienende Mobilfunknetz Verschlüsselung unterstützt.

Die Bereitschaft eines Endgeräts, unverschlüsselte Verbindungen zu akzeptieren, unterliegt bei dieser Ausgestaltung des Verfahrens wesentlich der Kontrolle des Heimnetzes. Auf diese Weise kann für ein höchstmögliches Maß an Übertragungssicherheit gesorgt werden; Nachlässigkeit des Benutzers kann nicht dazu führen, daß Verbindungen an Orten unverschlüsselt bleiben, wo keine technische oder rechtliche Notwendigkeit dazu besteht.

Durch die Übertragung der Verschlüsselungsverwaltungsinformation vom Heimnetz des Endgeräts aus ist gewährleistet, daß der Inhalt dieser Information zutreffend ist.

Die Übertragung der Verschlüsselungsverwaltungsinformation erfolgt in einfacher Weise über das bedienende Netzwerk.

Bei der Übertragung über das bedienende Netzwerk ist sicherzustellen, daß eine Verfälschung der Verschlüsselungsverwaltungsinformation durch das bedienende Netzwerk oder eine von einem Angreifer gefälschte Verschlüsselungsverwaltungsinformation von einem Angreifer erkannt werden kann. Zu diesem Zweck kann eine Überprüfung ihres Wahrheitsgehalts an dem mobilen Endgerät vorgesehen werden. Diese Überprüfung kann implizit dadurch erfolgen daß die Verschlüsselungsverwaltungsinformation vom Heimnetz mit einer eigenen Verschlüsselung gesendet wird oder daß die Information mit einem Integritätsmechanismus geschützt wird. Wenn diese Verschlüsselungsverwaltungsinformation für das bedienende Mobilfunknetz nicht verständlich (Verschlüsselung) ist oder durch einen Message Authentication Code (Integritätsmechanismus) geschützt ist, ist das bedienende Mobilfunknetz nicht in der Lage, sie zu manipulieren, sondern muß sie transparent übertragen, und auch eine für einen Hijacking-Angriff benutzte manipulierte Basisstation ist nicht in der Lage, eine Verschlüsselungsverwaltungsinformation zu generieren, die von dem Endgerät verstanden beziehungsweise als echt akzeptiert wird.

Immer dann, wenn die Verschlüsselungsverwaltungsinformation die Notwendigkeit bzw. Zulässigkeit einer unverschlüsselten Verbindung angibt, wird der Benutzer des Endgeräts vorteilhafterweise vor die Wahl gestellt, ob die Verbindung unverschlüsselt aufgebaut oder der Verbindungsversuch abgebrochen werden soll. Auf diese Weise ist gewährleistet, daß sich der Benutzer in Zweifelsfällen immer der Gefahr des unberechtigten Zugriffs auf seine Verbindung und der Möglichkeit des Abhörens bewußt ist und so von Einzelfall zu Einzelfall entscheiden kann, ob dieses Risiko tragbar ist, oder ob eine sicherere Übertragungsmöglichkeit gewählt werden soll.

Um die Bedienbarkeit des Endgerätes möglichst einfach zu halten, kann auch vorgesehen werden, daß im Falle der Notwendigkeit, d. h. wenn die vom Heimnetz gelieferte Verschlüsselungsverwaltungsinformation angibt, daß das bedienende Netzwerk keine Verschlüsselung unterstützt, eine unverschlüsselte Verbindung ohne weitere Rückfrage hergestellt wird. In diesem Fall ist es zweckmäßig, mit Hilfe einer Anzeige am Endgerät den Benutzer davon in Kenntnis zu setzen, daß die Verbindung unverschlüsselt ist.

Vorzugsweise ist das Endgerät zwischen wenigstens zwei von drei Betriebszuständen umschaltbar, die den oben angegebenen alternativen Verfahrensweisen im Falle des Fehlens einer Verschlüsselungsmöglichkeit entsprechen.

Ein geringer Signalisierungsaufwand beim Verbindungsaufbau kann unter diesen Umständen erreicht werden, indem vor Übertragung der Verschlüsselungsverwaltungsinformation bzw. dem Auswählen der Verschlüsselungstechnik das Endgerät von ihm unterstützte Integritätsschutztechniken an das bedienende Mobilfunknetz meldet und das bedienende Mobilfunknetz unter den von ihm selbst und dem Endgerät unterstützten Integritätsschutztechniken eine auswählt und dem Endgerät mitteilt.

Ein zur Durchführung des Verfahrens geeignetes Endgerät umfaßt unter anderem eine Steuereinheit, die in der Lage ist, unter vom Endgerät und dem bedienenden Mobilfunknetz unterstützten Verschlüsselungstechniken eine auszuwählen, und ein bedienendes Mobilfunksystem muß in der Lage sein, einen von dem Endgerät gesendeten Befehl zum Verwenden einer ausgewählten Verschlüsselungstechnik zu befolgen.

Ausführungsbeispiele werden nachfolgend anhand der Zeichnung näher erläutert. Es zeigen:
- Fig. 1: schematisch die Struktur eines Mobilfunknetzes, in dem sich ein Endgerät aufhält, dessen Heimnetz von dem Mobilfunknetz verschieden ist,
- Fig. 2: den Ablauf eines Verbindungsaufbaus zwischen dem Endgerät und dem Mobilfunknetz aus Fig. 1; und
- Fig. 3: eine Abwandlung des in Fig. 2 gezeigten Signalisierungsablaufs.

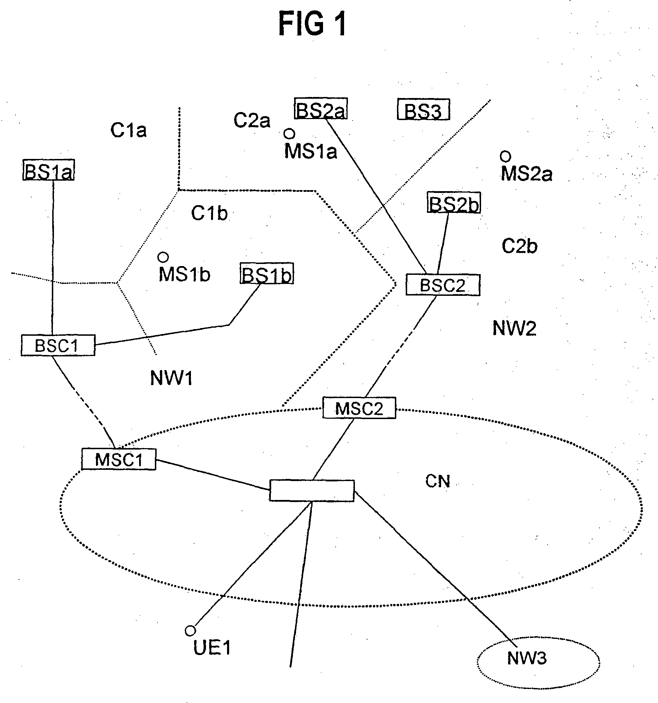

Fig. 1 veranschaulicht die Struktur eines MobilfunkKommunikationssystems, bei dem die vorliegende Erfindung anwendbar ist. Die Figur zeigt zwei Mobilfunknetze NW1 und NW2, wobei die Bezeichnungen der Komponenten des ersten Netzes jeweils die Ziffer 1 und die des zweiten Netzes die Ziffer 2 enthalten.

Jedes Netz NW1, NW2 umfaßt eine flächendeckende Anordnung von geographischen Zellen C1a, C1b,..., C2a, C2b,..., die jeweils der Reichweite des Funksignals von Basisstationen BS1a, BS1b, ...,BS2a, BS2b, ... entsprechen, die mit mobilen Endgeräten kommunizieren, die sich in den jeweiligen Zellen aufhalten. Diese Netze NW1, NW2 können z. B. UMTS-Mobilfunknetze sein.

Mehrere Basisstationen BS1a, BS1b, ... bzw. BS2a, BS2b, ... sind jeweils einem Base Station Controller BSC1, BSC2 zugeordnet, und die Base Station Controller BSC1, BSC2 sind jeweils über nicht dargestellte Zwischenstufen mit einer Mobilfunkvermittlungsstelle MSC1, MSC2 verbunden. Die Mobilfunkvermittlungsstellen vermitteln Verbindungen zwischen mobilen Endgeräten, wenn sich beide in Zellen befinden, die jeweils der gleichen Mobilfunkvermittlungsstelle zugeordnet sind.

Jedes mobile Endgerät ist einem sogenannten Heimnetz zugeordnet, das normalerweise das Mobilfunknetz eines Betreibers ist, mit dem der Benutzer des Endgeräts einen Nutzungsvertrag abgeschlossen hat. Sogenannte Roaming-Vereinbarungen zwischen den Netzbetreibern ermöglichen den Benutzern den Betrieb ihrer Endgeräte auch in anderen Mobilfunknetzen als dem Heimnetz. Ein Mobilfunknetz, über das ein mobiles Endgerät zu einem gegebenen Zeitpunkt seine Kommunikationen abwickelt, wird als bedienendes Netz bezeichnet; es kann von dem Heimnetz verschieden sein.

Zur Erläuterung der vorliegenden Erfindung wird insbesondere ein mobiles Endgerät MS1a betrachtet, das, wie seine Ziffer 1 erkennen läßt, das erste Mobilfunknetz NW1 als Heimnetz hat, sich aber in der Zelle C2a des zweiten Mobilfunknetzes NW2 aufhält. Verbindungen dieses Endgeräts MS1a zu anderen Endgeräten im Bereich des bedienenden zweiten Netzes NW2, wie etwa dem Endgerät MS2a, laufen unter alleiniger Beteiligung des zweiten Netzes NW2 ab, Verbindungen zu Endgeräten im Bereich des Heimnetzes NW1 wie etwa dem Endgerät MS1b oder zu Endgeräten eines dritten Mobilfunknetzes oder eines Festnetzes wie etwa den Endgerät UE1, werden über einen Festnetzbereich, hier als CN für Core Network bezeichnet, vermittelt.

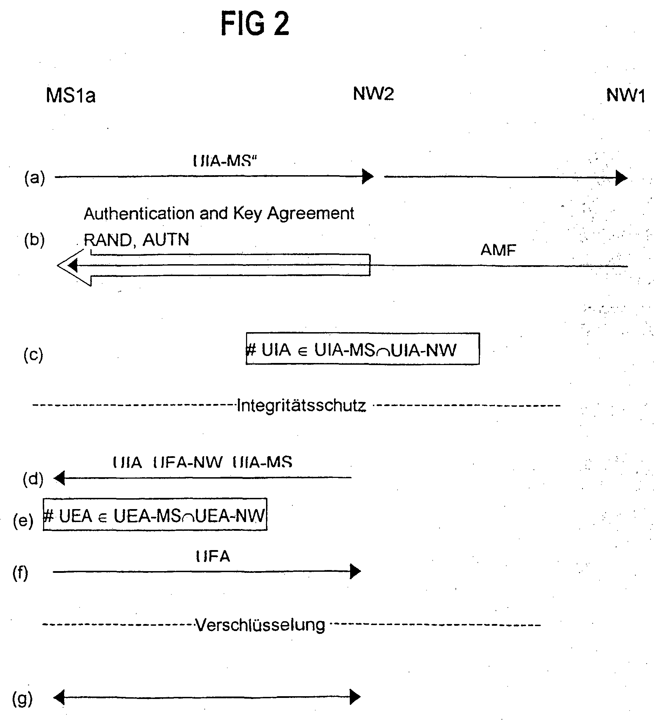

Fig.2 zeigt den Ablauf der Signalisierung zwischen dem Endgerät MS1a und einer Basisstation des bedienenden Netzes NW2 und dem Heimnetz NW1, wenn eine Verbindung mit dem Endgerät MS1a aufgebaut werden soll. Grund dafür kann sein, daß der Benutzer des Endgeräts MS1a eine Verbindung herstellen will oder daß ein Dritter ihn zu erreichen versucht. Als Beispiel wird angenommen, daß die Netze NW1, NW2 UMTS-Netze sind.

Das Endgerät MS1a beginnt den Aufbau der Verbindung zum bedienenden Mobilfunknetz NW2 mit einer Mitteilung über die Menge UIA-MS der von ihm unterstützten Integritätsschutztechniken (Stufe a).

Das bedienende Mobilfunknetz NW2 fragt vom Heimnetz NW1 des Endgeräts MS1a eine Verschlüsselungsverwaltungsinformation ab, die eine vom Betreiber des Heimnetzes NW1 autorisierte Information darüber enthält, ob, und ggf. welche, Verschlüsselungstechniken UEA auf dem Gebiet des bedienenden Mobilfunknetzes NW2 verfügbar sind (Stufe a). Bei UMTS ist diese Verschlüsselungsverwaltungsinformation ein Teil des sogenannten quintet, insbesondere ist sie ein Teil des sogennanten authentication token (AUTN).

Darauf folgt eine Stufe b der Authentifizierung.

Bei einer Authentifizierung sendet jeweils ein Partner an den anderen eine Authentifizierungsaufforderung, die eine Ziffer enthält, aus der der andere Partner anhand eines vorgegebenen Algorithmus und eines nur ihm bekannten Schlüssels eine Antwort berechnet. Der anfordernde Partner vergleicht die empfangene Antwort mit einem erwarteten Wert: Wenn beide übereinstimmen, erkennt er, daß der andere Partner tatsächlich der ist, der er zu sein vorgibt.

Bei UMTS sendet das Netzwerk ebenfalls ein Authentifikationszeichen (AUTN), das eine Sequenznummer SQN, ein Managementfeld AMF und einen Message Authentification Code MAC enthält. Dieses Zeichen erlaubt die Authentifizierung des Netzwerks durch das Endgerät. Das Managementfeld AMF enthält die vom Heimnetz NW1 gelieferte Verschlüsselungsverwaltungsinformation. Diese Information ist durch den Message Authentication Code integritätsgeschützt, so daß das bedienende Netz nicht in der Lage ist, diese Information zu verändern und sie deshalb transparent übertragen muß (Stufe b).

Da eine falsche Basisstation BS3, die nicht zu dem Mobilfunknetz NW2 gehört, und die eventuell zu Hijacking-Angriffen auf die Verbindung des Endgeräts MS1a dienen könnte, eine solche Verschlüsselungsverwaltungsinformation AMF vom Heimatnetz NW1 nicht erhält, ist sie nur schwerlich in der Lage, dem Endgerät MS1a eine gefälschte Authentifizierungsinformation AUTN so zu präsentieren, daß sie von dem Endgerät MS1a akzeptiert wird und dieses deshalb eine unverschlüsselte Verbindung eingeht.

Anstelle eines Integritätsschutzes könnte auch eine Verschlüsselung der Verschlüsselungsverwaltungsinformation AMF durch das Heimnetz NW1 eingesetzt werden, die dem bedienenden Mobilfunknetz NW2 nicht bekannt sein muß.

Eine solche Absicherung ist jedoch nicht zwingend erforderlich. Denkbar ist auch, daß die Absicherung gegen Angriffe in gewissen Umfang der Verantwortlichkeit des Benutzers überlassen wird, indem immer dann wenn eine vom Endgerät MS1a empfangene Verschlüsselungsverwaltungsinformation AMF angibt, daß eine unverschlüsselte Verbindung notwendig ist, eine Anzeige des Endgerätes MS1a den Benutzer hierauf aufmerksam macht. Falls eine solche Anzeige erscheint, während sich das Endgerät MS1a in einem Land befindet, in dem die Möglichkeit zur Verschlüsselung besteht, so kann daraus gefolgert werden, daß das Endgerät MS1a einem Angriff ausgesetzt ist und daß es ratsam ist, den Verbindungsaufbau abzubrechen.

Während der Authentifizierung wählt das bedienende Mobilfunknetz NW2 aus der Menge UIA-MS und der Menge UIA-NW der von ihm unterstützten Integritätsschutztechniken eine (UIA) aus und aktiviert diese (Stufe c). Eine Nachricht über die ausgewählte Integritätsschutztechnik UIA wird dann unter bereits bestehendem Integritätsschutz an das Endgerät MS1a übertragen (Stufe d). Diese Nachricht enthält zweckmäßigerweise auch die Bezeichnungen der zuvor vom Endgerät MS1a an das bedienende Mobilfunknetz NW2 gemeldeten Integritätsschutztechniken UIA-MS, so daß das Endgerät MS1a erkennen kann, ob diese Bezeichnungen vom bedienenden Mobilfunknetz MW2 korrekt empfangen worden sind, und die Bezeichnungen der Verschlüsselungstechniken UEA-NW, die das bedienende Mobilfunknetz NW2 unterstützt.

Das Endgerät MS1a wählt nun eine Verschlüsselungstechnik UEA aus, die sowohl von ihm selbst als auch vom bedienenden Mobilfunknetz NW2 unterstützt wird (Stufe e) und meldet diese zurück an das Netz NW2 (Stufe f). Von diesem Zeitpunkt an kann die verschlüsselte Übertragung (Stufe g) beginnen.

Wenn die Verschlüsselungsverwaltungsinformation AUTN echt ist und angibt, daß eine unverschlüsselte Verbindung zugelassen ist und das bedienende Netz NW2 keine Verschlüsselungstechniken anbietet, die auch durch das Endgerät MS unterstützt werden, gibt es verschiedene Möglichkeiten, weiter zu verfahren. Die erste und einfachste ist, unter diesen Bedingungen den Verbindungsaufbau abzubrechen. Dies schützt den Benutzer natürlich sehr wirksam vor betrügerischen Angriffen oder vorm Abgehörtwerden, bedeutet aber gleichzeitig, daß das Endgerät in einem Land, wo keine Verschlüsselungsmöglichkeit besteht, nicht einsetzbar ist. Diese Möglichkeit ist daher lediglich als ein erster von wenigstens zwei Betriebszuständen des Endgeräts sinnvoll, wobei der zweite Betriebszustand den Aufbau einer unverschlüsselten Verbindung zulassen sollte.

Da der erste Betriebszustand für den Benutzer das größtmögliche Maß an Sicherheit bietet, ist es allerdings zweckmäßig, daß das Endgerät MS1a diesen Betriebszustand immer dann einnimmt, wenn vom Benutzer nicht ausdrücklich ein anderer ausgewählt worden ist, bzw. daß es in diesen Zustand jedesmal selbsttätig zurückkehrt, wenn es ausgeschaltet gewesen ist oder wenn es eine Verschlüsselungsverwaltungsinformation AUTN empfängt, die die Möglichkeit einer Verschlüsselung angibt, etwa weil das Endgerät aus dem Gebiet eines Netzes ohne Verschlüsselungsmöglichkeit in ein Netz mit Verschlüsselungsmöglichkeit zurückgekehrt ist.

In dem zweiten Betriebszustand ist der Aufbau einer unverschlüsselten Verbindung zugelassen. Eine erste Variante läßt den Aufbau einer unverschlüsselten Verbindung ohne zwischenzeitliche Unterbrechung des Aufbauvorgangs zu. Damit der Benutzer auch in diesem Betriebszustand Kenntnis davon hat, daß er eine unverschlüsselte Verbindung benutzt und somit ein gewisses Sicherheitsrisiko eingeht, ist das Endgerät MS1a mit einer Anzeige versehen, die den Benutzer auf den eingestellten Betriebszustand hinweist. Diese Anzeige kann z. B. ein Blinken des üblicherweise bei mobilen Endgeräten vorhandenen Wählziffern-Anzeigefeldes oder von Teilen davon, ein speziell zu diesem Zweck vorgesehenes Leuchtelement oder auch ein in Abhängigkeit vom eingestellten Betriebszustand veränderliches Läutesignal sein.

Bei einer zweiten Variante des zweiten Betriebszustandes ist vorgesehen, daß eine Verbindung mit einem bedienenden Netz ohne Verschlüsselungsmöglichkeit in jedem Einzelfall nur dann aufgebaut wird, wenn der Benutzer dies ausdrücklich genehmigt. Dies kann zum Beispiel dadurch geschehen, daß eine Taste des Endgeräts, die der Benutzer im ersten Betriebszustand betätigt, um einen Anruf entgegenzunehmen oder seinerseits eine Verbindung zu einem Gesprächspartner herzustellen, im zweiten Betriebszustand nur dazu führt, daß im Anzeigefeld des Endgeräts ein Hinweis darauf erscheint, daß der Benutzer im Begriff ist, eine unsichere Verbindung herzustellen, und daß das Endgerät eine Einverständniserklärung vom Benutzer durch erneutes Drücken der gleichen Taste oder, sicherer noch, einer anderen Taste anfordert und die Verbindung erst nach einem solchen Tastendruck herstellt.

Mit dem oben beschriebenen Verfahren kann das Heimnetz auf einfache und effektive Weise gewährleisten, daß seine Nutzer Verschlüsselung zuverlässig in allen ihnen durch Roaming-Vereinbarungen zugänglichen Auslandsnetzen anwenden, die die Möglichkeit zur Verschlüsselung bieten und ihnen gleichzeitig die Freiheit gewähren, auch die Netze solcher Länder zu nutzen, die keine Verschlüsselung zulassen.

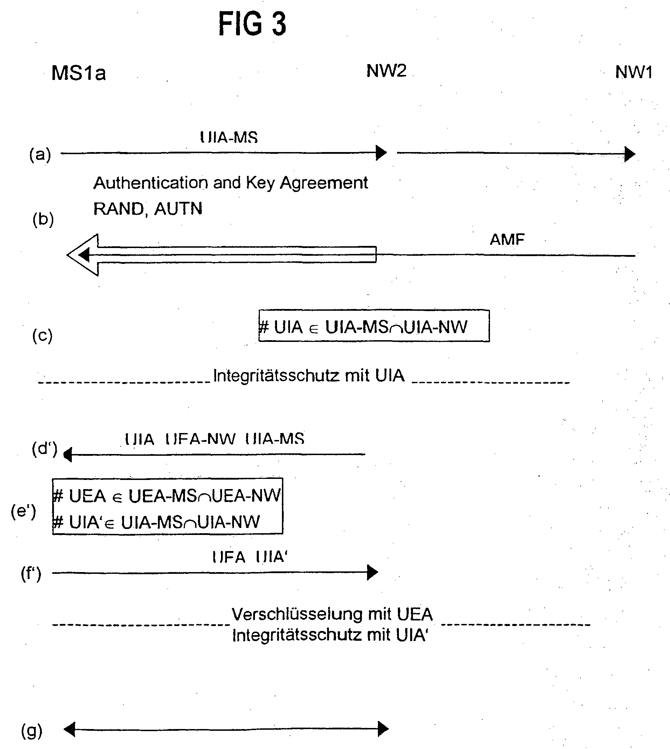

Aus den gleichen oben dargelegten Gründen, aus denen es vorteilhaft ist, wenn das Endgerät und nicht das bedienende Mobilfunknetz über die zu verwendende Verschlüsselungstechnik entscheidet, ist es gemäß einer weiterentwickelten Ausgestaltung des Verfahrens auch zweckmäßig, wenn das Endgerät über die Art des Integritätsschutzes entscheidet. Der Ablauf der Signalisierung bei diesem Verfahren ist in Figur 3 dargestellt. Die ersten Stufen des Verfahrens bis einschließlich der Einrichtung des vom bedienenden Mobilfunknetz NW2 ausgewählten Integritätsschutzes ist der gleiche wie oben mit Bezug auf Figur 2 beschrieben.

Die in Stufe d'an das Endgerät MS1a übertragene Nachricht, die die vom bedienenden Mobilfunknetz NW2 unterstützten Verschlüsselungstechniken UIA-NW enthält, enthält hier zusätzlich auch Bezeichnungen der vom bedienenden Mobilfunknetz NW2 unterstützten Integritätsschutztechniken. Das Endgerät MS1a wählt, nachdem es diese Nachricht empfangen hat, zusätzlich zur zu verwendenden Verschlüsselungstechnik UEA auch eine Integritätsschutztechnik UIA' aus (Stufe e'), die von Netz und Endgerät unterstützt wird, und sendet anschließend einen Befehl an das bedienende Mobilfunknetz NW2, im folgenden beide Auswahlen UEA, UIA' zu verwenden (Stufe f').

Dieses Verfahren verleiht dem Endgerät bei der sich anschließenden Kommunikation (Stufe g) zusätzlich noch die Kontrolle über die verwendete Integritätsschutztechnik, es kann somit unter den zur Verfügung stehenden Techniken immer diejenige verwendet werden, die vom Standpunkt des Benutzers das größtmögliche Maß an Sicherheit verspricht.

## Patentansprüche

1. Verfahren zum Aufbauen einer Verbindung zwischen einem Endgerät (MS1a), das eine Menge (UEA-MS) von Verschlüsselungstechniken unterstützt, und einem bedienenden Mobilfunknetz (NW2), mit den Schritten:
a) Übertragen einer Nachricht von dem bedienenden Mobilfunknetz (NW2) an das Endgerät (MS1a), die von dem bedienenden Mobilfunknetz (NW2) unterstützte Verschlüsselungstechniken (UEA-NW) bezeichnet;
b) wenn vorhanden, Auswählen einer Verschlüsselungstechnik (UEA) der Menge von Verschlüsslungstechniken, die vom Endgerät und vom bedienenden Mobilfunknetz unterstützt wird, durch das Endgerät (MS1a);
c) Betreiben der Verbindung unter Verwendung der von dem Endgerät ausgewählten Verschlüsselungstechnik; oder,
b') wenn keine vom Endgerät und vom bedienenden Mobilfunknetz unterstützte Verschlüsselungstechnik vorhanden ist, unverschlüsseltes Betreiben der Verbindung nur nach Genehmigung,
d) Übermitteln einer Verschlüsselungsverwaltungsinformation (AMF) von dem Heimnetz (NW1) an das Endgerät (MS1a), die dem Endgerät (MS1a) angibt, ob unverschlüsselte Verbindungen mit dem bedienenden Mobilfunknetz (NW2) notwendig sind,
wobei in Schritt c) die Verbindung ohne Verschlüsselung betrieben wird, wenn die Verschlüsselungsverwaltungsinformation (AMF) die Notwendigkeit einer unverschlüsselten Verbindung angibt,
wobei in dem Fall, dass die Verschlüsselungsverwaltungsinformation (AMF) die Notwendigkeit einer unverschlüsselten Verbindung angibt, der Benutzer des Endgeräts (MS1a) vor die Wahl gestellt wird, ob die Verbindung unverschlüsselt aufgebaut oder der Verbindungsversuch abgebrochen werden soll.

2. Verfahren nach Anspruch 1, **dadurch gekennzeichnet, dass** die Nachricht in Schritt a) unter Integritätsschutz übertragen wird.

3. Verfahren nach Anspruch 1 oder 2, **dadurch gekennzeichnet,**
**dass** das Endgerät (MS1a) von ihm unterstützte Integritätsschutztechniken (UIA-MS) an das bedienende Mobilfunknetz (NW2) meldet und das bedienende Mobilfunknetz (NW2) unter den von ihm selbst und dem Endgerät (MS1a) unterstützten Integritätsschutztechniken (UIA-NW; UIA-MS) eine auswählt und eine Mitteilung über die ausgewählte Integritätsschutztechnik (UIA) an das Endgerät (MS1a) übermittelt.

4. Verfahren nach Anspruch 3, **dadurch gekennzeichnet, dass** die Nachricht in Schritt a) die Mitteilung über die von dem bedienenden Mobilfunknetz (NW2) ausgewählte Integritätsschutztechnik (UIA) beinhaltet.

5. Verfahren nach einem der vorhergehenden Ansprüche, **dadurch gekennzeichnet,**
**dass** das bedienende Mobilfunknetz (NW2) von ihm unterstützte Integritätsschutztechniken (UIA-NW) an das Endgerät (MS1a) meldet, und das Endgerät (MS1a) unter den von ihm selbst und dem bedienenden Mobilfunknetz (NW2) unterstützten Integritätsschutztechniken eine (UIA') auswählt, und
**dass** die Verbindung unter der vom Endgerät ausgewählten Integritätsschutztechnik betrieben wird.

6. Verfahren nach Anspruch 5, **dadurch gekennzeichnet,**
**dass** die Nachricht in Schritt a) die Meldung der vom bedienenden Mobilfunknetz (NW2) unterstützten Integritätsschutztechniken (UIA-NW) beinhaltet.

7. Verfahren nach einem der vorhergehenden Anspruche, **dadurch gekennzeichnet,**
**dass** in Schritt d) die Übermittlung der Verschlüsselungsverwaltungsinformation (AMF) an das Endgerät (MS1a) über das bedienende Netz (NW2) und unter Integritätsschutz stattfindet.

8. Verfahren nach einem der vorhergehenden Ansprüche, **dadurch gekennzeichnet,**
**dass** in Schritt d) die Übermittlung der Verschlüsselungsverwaltungsinformation (AMF) an das Endgerät (MS1a) über das bedienende Netz (NW2) und auf einem authentisierten Signalisierungskanal stattfindet.

9. Endgerät mit Mitteln zur Durchführung der Schritte eines Verfahrens nach einem der vorhergehenden Ansprüche.

10. Endgerät nach Anspruch 9, **dadurch gekennzeichnet,**
**dass** es über eine Steuereinheit zum Auswählen einer Verschlüsselungstechnik (UEA), die vom Endgerät (MS1a) und vom bedienenden Mobilfunknetz (NW2) unterstützt wird, verfügt.

11. Endgerät nach Anspruch 10, **dadurch gekennzeichnet,**
**dass** die Steuereinheit dazu eingerichtet ist, eine Integritätsschutztechnik auszuwählen, die vom Endgerät (MS1a) und vom bedienenden Mobilfunknetz (NW2) unterstützt wird.

12. Endgerät nach Anspruch 10 oder 11, **dadurch gekennzeichnet,**
**dass** die Steuereinheit eine unverschlüsselte Verbindung zwischen dem Endgerät (MS1a) und dem bedienenden Mobilfunknetz (NW2) zulässt, wenn eine Verschlüsselungsverwaltungsinformation (AMF) angibt, dass das bedienende Mobilfunknetz (NW2) keine Verschlüsselungstechnik unterstützt.

13. Endgerät nach einem der Ansprüche 10 bis 12, **dadurch gekennzeichnet,**
**dass** es eine Verschlüsselungsanzeige aufweist, die einem Benutzer anzeigt, ob das bedienende Mobilfunknetz (NW2) eine Verschlüsselungstechnik unterstützt.

14. Endgerät nach Anspruch 13, **dadurch gekennzeichnet,**
**dass** es dazu eingerichtet ist, die Verschlüsselungsverwaltungsinformation (AMF) beim Aufbau einer Verbindung von dem bedienenden Mobilfunknetz (NW2) zu empfangen.

15. Endgerät nach Anspruch 13 oder 14, **dadurch gekennzeichnet,**
**dass** die Steuereinheit zwischen wenigstens zwei der folgenden Betriebszustände durch einen Benutzer umschaltbar ist:
- ein erster Betriebszustand, in dem eine Verbindung mit einem keine Verschlüsselung unterstützenden bedienenden Mobilfunknetz aufgebaut wird und eine Verschlüsselungsanzeige betätigt wird, um einen Benutzer in Kenntnis zu setzen, dass die Verbindung unverschlüsselt ist;
- ein zweiter Betriebszustand, in dem der Versuch zum Aufbau einer Verbindung abgebrochen wird, wenn das bedienende Mobilfunknetz keine Verschlüsselungstechnik unterstützt;
- ein dritter Betriebszustand, in dem, wenn das bedienende Mobilfunknetz keine Verschlüsselungstechnik unterstützt, der Versuch zum Aufbau einer Verbindung unterbrochen und eine Eingabe eines Benutzers angefordert wird, die bestimmt, ob der Versuch abgebrochen oder fortgesetzt werden soll.

16. Mobilfunknetz, das dazu eingerichtet ist,
einen Befehl von einem eine Menge von Verschlüsselungstechniken unterstützenden Endgerät (MS1a) zu befolgen, der eine für eine Verbindung zwischen dem Endgerät (MS1a) und dem Mobilfunknetz (NW2) zu verwendende Verschlüsselungstechnik (UEA) bezeichnet, aufweisend:
- ein Heimnetz (NW1) des Endgeräts sowie
- ein an das Heimnetz gekoppeltes, bedienendes Mobilfunknetz (NW2),
und eingerichtet
a) zum Übertragen einer Nachricht von dem bedienenden Mobilfunknetz (NW2) an das Endgerät (MS1a), die von dem bedienenden Mobilfunknetz (NW2) unterstützte Verschlüsselungstechniken (UEA-NW) bezeichnet,
b) zum Betreiben der Verbindung unter Verwendung einer vom Endgerät aus der Menge von Verschlüsslungstechniken ausgewählten Verschlüsselungstechnik, oder, wenn keine vom Endgerät und vom bedienenden Mobilfunknetz unterstützte Verschlüsselungstechnik vorhanden ist, zum unverschlüsselten Betreiben der Verbindung nur nach Genehmigung und
c) zum Übermitteln einer Verschlüsselungsverwaltungsinformation (AMF) vom Heimnetz (NW1) an das Endgerät (MS1a), die dem Endgerät (MS1a) angibt, ob unverschlüsselte Verbindungen mit dem bedienenden Mobilfunknetz (NW2) notwendig sind, wobei
d) in Schritt b) die Verbindung ohne Verschlüsselung betrieben wird, wenn die Verschlüsselungsverwaltungsinformation (AMF) die Notwendigkeit einer unverschlüsselten Verbindung angibt, wobei in dem Fall, dass die Verschlüsselungsverwaltungsinformation (AMF) die Notwendigkeit einer unverschlüsselten Verbindung angibt, der Benutzer des Endgeräts (MS1a) vor die Wahl gestellt wird, ob die Verbindung unverschlüsselt aufgebaut oder der Verbindungsversuch abgebrochen werden soll.

17. Mobilfunknetz nach Anspruch 16, das dazu eingerichtet ist, einen Befehl von dem Endgerät (MS1a) zu befolgen, der eine für eine Verbindung zwischen dem Endgerät (MS1a) und dem Mobilfunknetz (NW2) zu verwendende Integritätsschutztechnik (UIA') bezeichnet.

18. Mobilfunknetz nach einem der Ansprüche 16 oder i7, das dazu eingerichtet ist, eine Nachricht, dass eine Verbindung zwischen ihm und dem Endgerät (MS1a) aufgebaut werden soll, an das Heimnetz (NW1) weiterzuleiten und eine Verschlüsselungsverwaltungsinformation (AMF) vom Heimnetz (NW1) an das Endgerät (MS1a) weiterzuleiten, die Angaben über die von dem Mobilfunknetz (NW2) unterstützten Verschlüsselungstechniken (UEA-NW) enthält.

## Claims

1. A method for setting up a connection between a terminal (MS1a) which supports a set (UEA-MS) of encryption techniques, and a serving mobile radio network (NW2), with the following steps:
a) transmitting of a message from the serving mobile radio network (NW2) to the terminal (MS1a), which designates encryption techniques (UEA-NW) supported by the serving mobile radio network (NW2);
b) if provided, selecting an encryption technique (UEA) from the set of encryption techniques which is supported by the terminal and by the serving mobile radio network, by the terminal (MS1a);
c) operating the connection by using the encryption technique selected by the terminal; or
b') if no encryption technique supported by the terminal and by the serving mobile radio network is provided, unencrypted operating of the connection only after authorization,
d) transmitting an encryption administration information item (AMF) from the home network (NW1) to the terminal (MS1a), which tells the terminal (MS1a) whether unencrypted connections to the serving mobile radio network (NW2) are necessary, where in step c), the connection is operated without encryption if the encryption administration information item (AMF) specifies that an unencrypted connection is necessary, where, in the case where the encryption administration information item (AMF) specifies
that an unencrypted connection is necessary, the user of the terminal (MS1a) is given the choice whether the connection is to be set up unencrypted or the connection atempt is to be aborted.

2. The method as claimed in claim 1, **characterized in that** the message in step a) is transmitted with integrity protection.

3. The method as claimed in claim 1 or 2, **characterized in that** the terminal (MS1a) reports integrity protection techniques (UIA-MS) supported by it to the serving mobile radio network (NW2) and the serving mobile radio network (NW2) selects one among the integrity protection techniques (UIA-NW; UIA-MS) supported by itself and by the terminal (MS1a) and transmits a message about the selected integrity protection technique (UIA) to the terminal (MS1a).

4. The method as claimed in claim 3, **characterized in that** the message in step a) contains the information about the integrity protection technique (UIA) selected by the serving mobile radio network (NW2).

5. The method as claimed in one of the preceding claims, **characterized in that** the serving mobile radio network (NW2) reports integrity protection techniques (UIA-NW) supported by it to the terminal (MS1a) and the terminal (MS1a) selects one (UIA') among the integrity protection techniques supported by itself and the serving mobile radio network (NW2), and **in that** the connection is operated under the integrity protection technique selected by the terminal.

6. The method as claimed in claim 5, **characterized in that** the message in step a) contains the report of the integrity protection techniques (UIA-NW) supported by the serving mobile radio network (NW2).

7. The method as claimed in one of the preceding claims, **characterized in that** in step d), the encryption administration information item (AMF) is transmitted to the terminal (MS1a) via the serving network (NW2) and under integrity protection.

8. The method as claimed in one of the preceding claims, **characterized in that** in step d), the encryption administration information item (AMF) is transmitted to the terminal (MS1a) via the serving network (NW2) and on an authenticated signaling channel.

9. A terminal having means for carrying out the steps of a method as claimed in one of the preceding claims.

10. The terminal as claimed in claim 9, **characterized in that** it has a control unit for selecting an encryption technique (UEA) which is supported by the terminal (MS1a) and by the serving mobile radio network (NW2).

11. The terminal as claimed in claim 10, **characterized in that** the control unit is also able to select an integrity protection technique which is supported by the terminal (MS1a) and by the serving mobile radio network (NW2).

12. The terminal as claimed in claim 10 or 11, **characterized in that** the control unit allows an unencrypted connection between the terminal (MS1a) and the serving mobile radio network (NW2) when an encryption administration information item (AMF) specifies that the serving mobile radio network (NW2) does not support an encryption technique.

13. The terminal as claimed in one of claims 10 to 12, **characterized in that** it exhibits an encryption display which indicates to a user whether the serving mobile radio network (NW2) supports an encryption technique.

14. The terminal as claimed in claim 13, **characterized in that** it is set up for receiving the encryption administration information item (AMF) during the setting-up of a connection by the serving mobile radio network (NW2).

15. The terminal as claimed in claim 13 or 14, **characterized in that** the control unit can be switched by a user between at least two of the following operating modes:
- a first operating mode in which a connection is set up with a serving mobile radio network which does not support encryption and an encryption indication is operated in order to inform a user that the connection is unencrypted;
- a second operating mode in which the attempt to set up a connection is aborted if the serving mobile radio network does not support an encryption technique;
- a third operating mode in which, if the serving mobile radio network does not support an encryption technique, the attempt to set up a connection is interrupted and a user input is requested which determines whether the attempt is to be aborted or to be continued.

16. A mobile radio network which is set up to obey an instruction by a terminal (MS1a) which supports a set of encryption techniques and designates an encryption technique (UEA) to be used for a connection between the terminal (MS1a) and the mobile radio network (NW2), having:
- a home network (NW1) of the terminal and
- a serving mobile radio network (NW2) coupled to the home network,
and set up
a) to transmit a message from the serving mobile radio network (NW2) to the terminal (MS1a), which designates encryption techniques (UEA-NW) supported by the serving mobile radio network (NW2),
b) to operate the connection using an encryption technique selected from the set of encryption techniques by the terminal or, if no encryption technique supported by the terminal and by the serving mobile radio network is provided, to operate the connection without encryption only after authorization, and
c) to transmit an encryption administration information item (AMF) from the home network (NW1) to the terminal (MS1a), which tells the terminal (MS1a) whether unencrypted connections to the serving mobile radio network (NW2) are necessary, where
d) in step b), the connection is operated without encryption if the encryption administration information item (AMF) specifies that an unencrypted connection is necessary, where, in the case where the encryption administration information item (AMF) specifies that an unencrypted connection is necessary, the user of the terminal (MS1a) is given the choice whether the connection is to be set up unencrypted or the connection attempt is to be aborted.

17. The mobile radio network as claimed in claim 16 which is set up to obey an instruction by the terminal (MS1a), which designates an integrity protection technique (UIA') to be used for a connection between the terminal (MS1a) and the mobile radio network (NW2).

18. The mobile radio network as claimed in one of claims 16 or 17 which is set up to forward a message that a connection is to be set up between it and the terminal (MS1a) to the home network (NW1) and to forward an encryption administration information item (AMF) from the home network (NW1) to the terminal (MS1a), which contains information about the encryption techniques (UEA-NW) supported by the mobile radio network (NW2).

## Revendications

1. Procédé pour établir une liaison entre un terminal (MS1a), qui supporte une quantité (UEA-MS) de techniques de codage, et un réseau téléphonique mobile de desserte (NW2), comportant les étapes suivantes:
a) transmission d'un message du réseau téléphonique mobile de desserte (NW2) au terminal (MS1a), qui désigne les techniques de codage (UEA-NW) supportées par le réseau téléphonique mobile de desserte (NW2);
b) lorsqu'elle existe, choix par le terminal (MS1a) d'une technique de codage (UEA) parmi la quantité de techniques de codage, qui sont supportées par le terminal et par le réseau téléphonique mobile de desserte;
c) exploitation de la liaison avec utilisation de la technique de codage choisie par le terminal; ou
b') s'il n'existe aucune technique de codage supportée par le terminal et par le réseau téléphonique mobile de desserte, exploitation de la liaison sans codage uniquement après autorisation;
d) transmission d'une information de gestion du codage (AMF) depuis le réseau domestique (NW1) au terminal (MS1a), qui indique au terminal (MS1a) si des liaisons non codées avec le réseau téléphonique mobile de desserte (NW2) sont nécessaires;
dans lequel, à l'étape c), la liaison est exploitée sans codage, lorsque l'information de gestion du codage (AMF) indique la nécessité d'une liaison non codée,
dans lequel, dans le cas où l'information de gestion du codage (AMF) indique la nécessité d'une liaison non codée, l'utilisateur du terminal (MS1a) est placé devant le choix de déterminer si la liaison sans codage doit être établie ou si la demande de liaison doit être annulée.

2. Procédé selon la revendication 1, caractérisé en ce l'on transmet le message à l'étape a) avec protection de l'intégrité.

3. Procédé selon la revendication 1 ou 2, **caractérisé en ce que** le terminal (MS1a) signale au réseau téléphonique mobile de desserte (NW2) les techniques de protection de l'intégrité (UIA-MS) qu'il supporte et le réseau téléphonique mobile de desserte (NW2) en choisit une parmi les techniques de protection de l'intégrité (UIA-NW; UIA-MS) supportées par lui-même et par le terminal (MS1a) et transmet au terminal (MS1a) une communication relative à la technique de protection de l'intégrité choisie (UIA).

4. Procédé selon la revendication 3, **caractérisé en ce que** le message à l'étape a) contient la communication relative à la technique de protection de l'intégrité (UIA) choisie par le réseau téléphonique mobile de desserte (NW2).

5. Procédé selon l'une quelconque des revendications précédentes, **caractérisé en ce que** le réseau téléphonique mobile de desserte (NW2) signale au terminal (MS1a) des techniques de protection de l'intégrité (UIA-NW) qu'il supporte, et le terminal (MS1a) en choisit une (UIA') parmi les techniques de protection de l'intégrité supportées par lui-même et par le réseau téléphonique mobile de desserte (NW2), et **en ce que** l'on exploite la liaison sous la technique de protection de l'intégrité choisie par le terminal.

6. Procédé selon la revendication 5, **caractérisé en ce que** le message à l'étape a) contient la communication des techniques de protection de l'intégrité (UIA-NW) supportées par le réseau téléphonique mobile de desserte (NW2).

7. Procédé selon l'une quelconque des revendications précédentes, **caractérisé en ce qu'**à l'étape d), la transmission de l'information de gestion du codage (AMF) au terminal (MS1a) est effectuée par l'intermédiaire du réseau de desserte (NW2) et sous protection de l'intégrité.

8. Procédé selon l'une quelconque des revendications précédentes, **caractérisé en ce qu'**à l'étape d), la transmission de l'information de gestion du codage (AMF) au terminal (MS1a) est effectuée par l'intermédiaire du réseau de desserte (NW2) et sur un canal de signalisation authentifié.

9. Terminal doté de moyens pour la mise en oeuvre des étapes d'un procédé selon l'une quelconque des revendications précédentes.

10. Terminal selon la revendication 9, **caractérisé en ce qu'**il dispose d'une unité de commande pour choisir une technique de codage (UEA), qui est supportée par le terminal (MS1a) et par le réseau téléphonique mobile de desserte (NW2).

11. Terminal selon la revendication 10, **caractérisé en ce que** l'unité de commande est configurée afin de choisir une technique de protection de l'intégrité, qui est supportée par le terminal (MS1a) et par le réseau téléphonique mobile de desserte (NW2).

12. Terminal selon la revendication 10 ou 11, **caractérisé en ce que** l'unité de commande permet une liaison non codée entre le terminal (MS1a) et le réseau téléphonique mobile de desserte (NW2), lorsqu'une information de gestion du codage (AMF) indique que le réseau téléphonique mobile de desserte (NW2) ne supporte aucune technique de codage.

13. Terminal selon l'une quelconque des revendications 10 à 12, **caractérisé en ce qu'**il présente un affichage de codage, qui indique à un utilisateur si le réseau téléphonique mobile de desserte (NW2) supporte une technique de codage.

14. Terminal selon la revendication 13, **caractérisé en ce qu'**il est configuré afin de recevoir du réseau téléphonique mobile de desserte (NW2) l'information de gestion du codage (AMF) lors de l'établissement d'une liaison.

15. Terminal selon la revendication 13 ou 14, **caractérisé en ce que** l'unité de commande peut être commutée par un utilisateur entre au moins deux des états de fonctionnement suivants:
- un premier état de fonctionnement, dans lequel on établit une liaison avec un réseau téléphonique mobile de desserte ne supportant aucun codage et on active un affichage de codage, afin de porter à la connaissance d'un utilisateur que la liaison n'est pas codée;
- un deuxième état de fonctionnement, dans lequel on annule la demande d'établissement d'une liaison, lorsque le réseau téléphonique mobile de desserte ne supporte aucune technique de codage;
- un troisième état de fonctionnement, dans lequel, lorsque le réseau téléphonique mobile de desserte ne supporte aucune technique de codage, on interrompt la demande d'établissement d'une liaison et on sollicite une réponse d'un utilisateur, qui détermine si la demande doit être annulée ou poursuivie.

16. Réseau téléphonique mobile, qui est configuré pour suivre une instruction d'un terminal (MS1a) supportant une quantité de techniques de codage, instruction qui désigne une technique de codage (UEA) à utiliser pour une liaison entre le terminal (MS1a) et le réseau téléphonique mobile (NW2), présentant:
- un réseau domestique (NW1) du terminal, ainsi que
- un réseau téléphonique mobile de desserte (NW2), couplé au réseau domestique,
et configuré pour
a) transmettre, du réseau téléphonique mobile de desserte (NW2) au terminal (MS1a), un message qui désigne les techniques de codage (UEA-NW) supportées par le réseau téléphonique mobile de desserte (NW2),
b) exploiter la liaison avec utilisation d'une technique de codage choisie par le terminal parmi la quantité de techniques de codage, ou, lorsqu'il n'existe aucune technique de codage supportée par le terminal et par le réseau téléphonique mobile de desserte, exploiter la liaison sans codage uniquement après autorisation, et
c) transmettre une information de gestion du codage (AMF) du réseau domestique (NW1) au terminal (MS1a), laquelle indique au terminal (MS1a) si des liaisons non codées avec le réseau téléphonique mobile de desserte (NW2) sont nécessaires, dans lequel
d) à l'étape b), on exploite la liaison sans codage, lorsque l'information de gestion du codage (AMF) indique la nécessité d'une liaison non codée. Dans ce processus, dans le cas où l'information de gestion du codage (AMF) indique la nécessité d'une liaison non codée, l'utilisateur du terminal (MS1a) est placé devant le choix de déterminer si la liaison doit être établie sans codage ou si la demande de liaison doit être annulée.

17. Réseau téléphonique mobile selon la revendication 16, qui est configuré afin de suivre une instruction du terminal (MS1a), qui désigne une technique de protection de l'intégrité (UIA') à utiliser pour une liaison entre le terminal (MS1a) et le réseau téléphonique mobile (NW2).

18. Réseau téléphonique mobile selon une des revendications 16 ou 17, qui est configuré afin de retransmettre au réseau domestique (NW1) un message selon lequel une liaison entre lui-même et le terminal (MS1a) doit être établie et de retransmettre du réseau domestique (NW1) au terminal (MS1a) une information de gestion du codage (AMF), qui contient des indications concernant les techniques de codage (UEA-NW) supportées par le réseau téléphonique mobile (NW2).
